Europäisches Patentamt

European Patent Office

Office européen des brevets

(11) Publication number: **0 619 555 A2**

# EUROPEAN PATENT APPLICATION

(21) Application number: **94103746.7**

(22) Date of filing: **11.03.94**

(51) Int. Cl.5: **G06F 15/72**

(30) Priority: **17.03.93 US 32229**

(43) Date of publication of application:
**12.10.94 Bulletin 94/41**

(84) Designated Contracting States:
**DE FR GB**

(71) Applicant: **EASTMAN KODAK COMPANY**
**343 State Street**
**Rochester New York 14650-2201 (US)**

(72) Inventor: **Leone, Anthony James, c/o**
**EASTMAN KODAK COMPANY**
**Patent Legal Staff,**
**343 State Street**
**Rochester, New York 14650-2201 (US)**
Inventor: **Smith, Steven Michael, c/o**
**EASTMAN KODAK COMPANY**
**Patent Legal Staff,**
**343 State Street**
**Rochester, New York 14650-2201 (US)**

(74) Representative: **Schmidt, Peter, Dipl.-Ing. et al**
**KODAK Aktiengesellschaft**
**Patentabteilung**
**D-70323 Stuttgart (DE)**

(54) **Method for optimal color rendering of multiple objects in a page description.**

(57) Multiple color objects are optimally rendered in a single print job, such that, for example, the rendering of presentation graphics images may be carried out differently than the rendering of sampled images, by use of remapped graphics paint operators and a plurality of color rendering dictionaries that operate in the interpretation of a page description in a computer-based publishing system.

FIG. 1

**Cross Reference to Related Application**

This application is related to U.S. Patent Application SN 017,198, entitled "Method and Associated Apparatus for Transforming Input Color Values In An Input Color Space to Output Color Values In An Output Color Space" bearing the Assignee's Docket No. 67,248, and to U.S. Patent Application SN 017,094, entitled "Method For Cross-Device Color Calibration And Enhancement Using Explicit Constraints", bearing the Assignee's Docket No. 66,561, both filed on February 12, 1993, the contents of which are disclosed herein by this reference.

**Field of the Invention**

The present invention is directed to the field of digital image processing and more particularly to the rendering of multiple objects in a page description by an image rendering device.

**Background of the Invention**

In the processing of images to be printed by a computer-based printing and publishing system, a page description language serves as the interchange standard for transmission and storage of a printable or displayable document that is generated by use of an application program. An associated page description language interpreter, typically installed in a specific raster output device, then interprets the page description and causes the page to be rendered on the respective output device.

Facilities for outputting graphical objects in a page description are divided between color specification facilities and color rendering facilities. In the former, the abstract colors and shapes of an object are first specified in a device-independent way, according to a predefined color space. Then, the description of the object is processed in a device-dependent way so as to cause the object to be rendered on the page.

However, in the step of interpreting the color values of a graphical object, there is no differentiation between the color values of an object that represents a graphical shape, and the color values of an object that represents a sampled image. As a result, an object that is a graphical shape (in the form of, for example, a bar chart, graph, or other presentation graphic) is rendered poorly if the rendering step is optimized for reproduction of another type of object, such as one in the form of a sampled image. Alternatively, an object that is a sampled image (in the form of, for example, a photograph or other bit-mapped image) is rendered poorly if the rendering is optimized for the color values of an object in the form of a graphical shape. The resulting print, or other hard copy output of the rendered page, is then considered to be of lesser color quality than is desired.

**Summary of the Invention**

In accordance with a preferred embodiment of the present invention, a method is provided for optimal color rendering of multiple objects in a page description, the objects having object types, comprising the steps of:

a) providing a plurality of color rendering dictionaries, wherein each dictionary may be used to implement a particular color transformation of the color values of an object to be rendered;

b) establishing a first painting operator for the painting of a graphical shape object type;

c) remapping the first painting operator to cause the rendering of objects being of the graphical shape object type to be implemented according to a first one of said color rendering dictionaries;

d) establishing a second painting operator for the painting of a sampled image object type; and

e) remapping the second painting operator to cause the rendering of objects being of the sampled image object type to be implemented according to a second one of said color rendering dictionaries.

**Brief Description of the Drawings**

Figure 1 is a simplified schematic representation of a color document printing or publishing system constructed according to the present invention.

Figure 2 is a simplified representation of a complex page to be rendered on the system of Figure 1.

Figures 3A and 3B are simplified representations of a user interface panel operable in the system of Figure 1.

Figure 4 is a simplified block diagram of the color rendering process in the system of Figure 1.

Figure 5 is a simplified program flow diagram of the remapped setcolor procedure utilized in the system of Figure 1.

Figure 6 is a simplified program flow diagram of the remapped image procedure utilized in the system of Figure 1.

## Detailed Description of the Preferred Embodiment

A preferred embodiment of a method for optimal color rendering of multiple objects in a page description according to the present invention will now be described with particular reference to an implementation in the Adobe PostScript (R) page description language. PostScript is but one example of an interpretive programming language with graphics capabilities. Its primary application is in describing the appearance of text, graphical shapes, and sampled images in printed or displayed pages. However, this implementation of the preferred embodiment is not meant to be limiting and it should be understood that the invention may be implemented in other page description languages and page description interpreters known in the art.

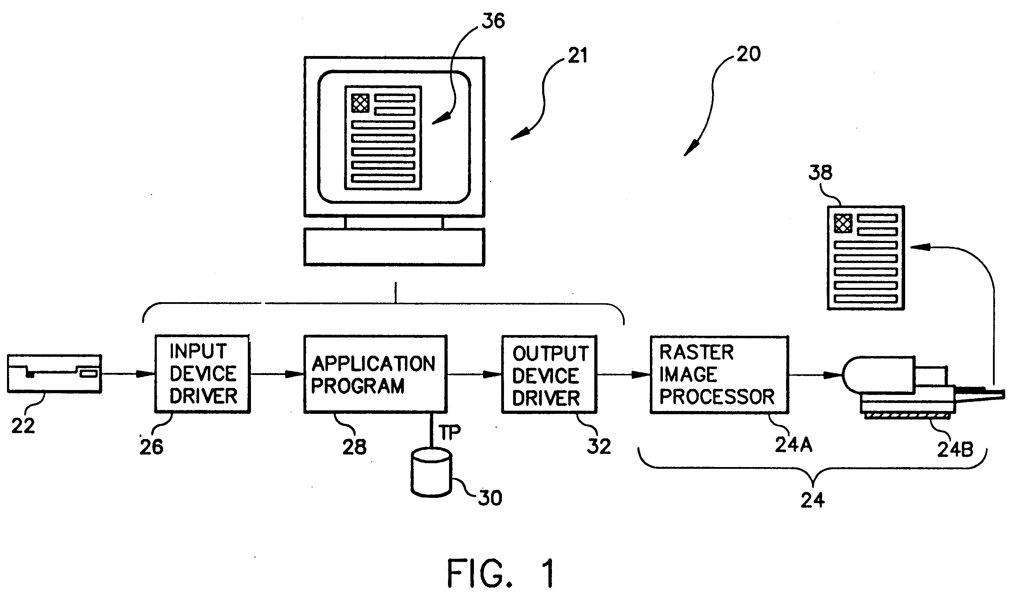

With reference now to Figure 1, a computer-based printing or publishing system 20 may be constructed according to the present invention to include an imaging workstation 21 operatively connected to an input device 22 preferably in the form of an optical or magnetic disc reader, that is operable as a source of sampled images, and an output device 24 in the form of a raster image processor (RIP) 24A and a raster image output device 24B. The workstation 21 is equipped with an input device driver 26, a page composition application program 28, a memory 30, and an output device driver 32 for driving the raster image output device. Graphical objects to be rendered by the raster image output device can originate as sampled images provided by the input device, or as text objects and graphical shape objects created by the application program. The output device driver and application can communicate with a color management system (not shown) and generate a page description of a page according to a page description language (preferably in the form of Adobe PostScript) to be printed by the output device. A page description language interpreter resident in the RIP interprets the page description and prepares the complex color page 36 for rendering by the output device as a hard copy output page 38.

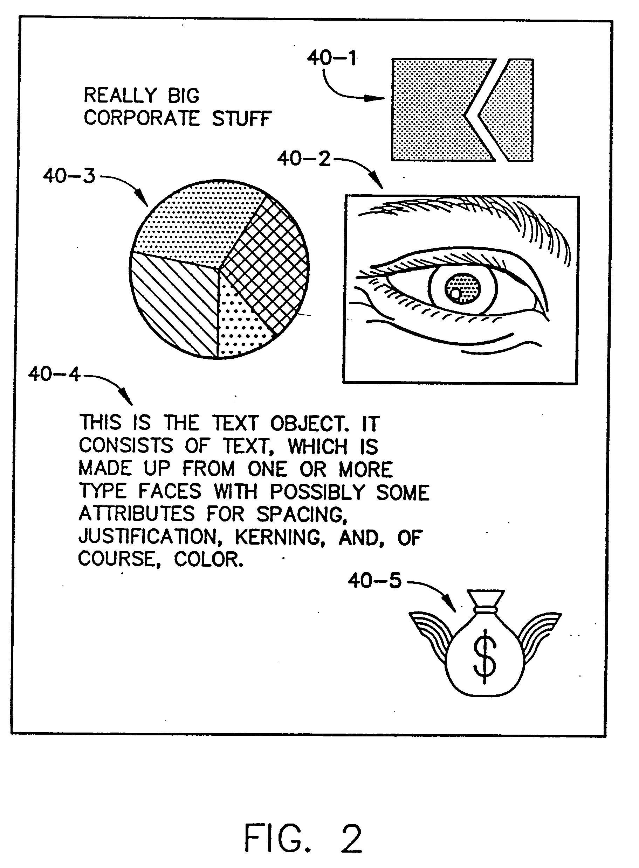

Figure 2 illustrates an example of a complex color page that may be prepared for optimal rendering by use of the publishing system of Figure 1. The page may include a first object 40-1 requiring a special color rendering, such as in Pantone ink, or in another predefined ink, such as in a corporate logo. A second object 40-2 in the form of a sampled image may require rendering as an image with high contrast photographic quality. A third object 40-3 in the form of a presentation graphic may require rendering as a high-saturation color quality image. A fourth object 40-4 in the form of text may be rendered in a single solid color. Lastly, the page may include a fifth object 40-5 in the form of a line drawing or sample of clip art that also may be rendered in a single solid color. According to a primary object of the present invention, the color rendering of each one of the aforementioned objects may be optimized such that the rendered page has an improved color quality.

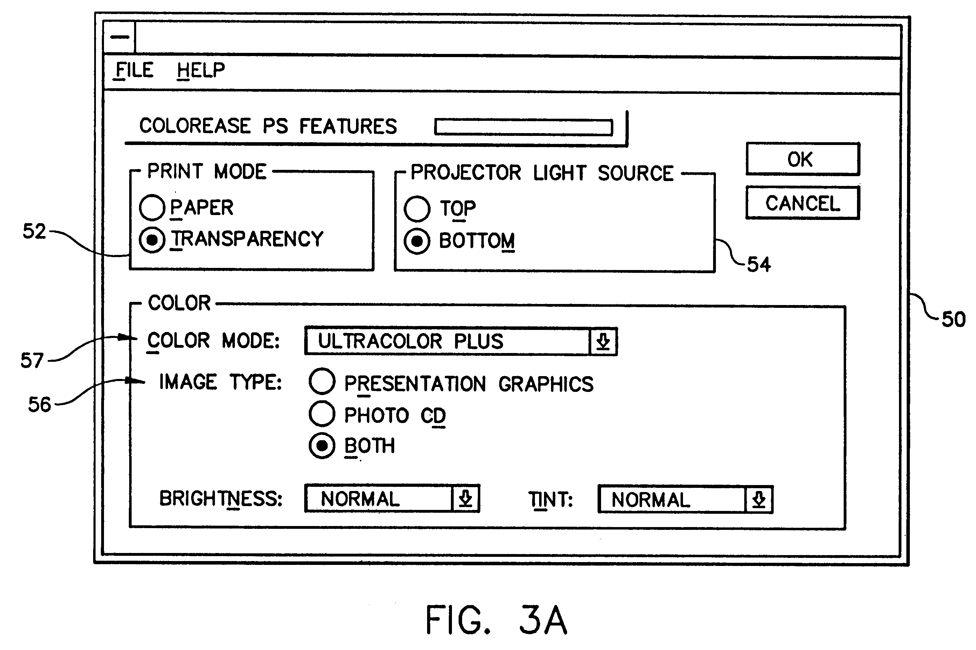

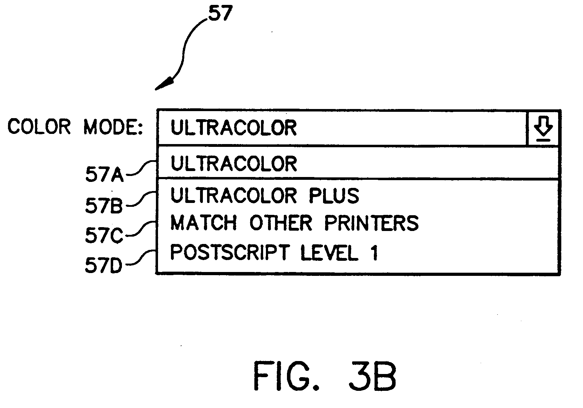

Accordingly, as shown in Figure 3A, the application program 28 or output device driver 32 are contemplated as offering a user interface 50 whereby the user may select, with respect to the objects to be rendered, rendering option variations that are provided to account for differences in the object types (e.g., sampled images or graphical shapes) and differences in media (i.e. reflection prints, single pass projector transparencies, and double pass projector transparencies). The interface includes menu options 52 for identifying the print mode, such as hard copy output on paper (a reflection print) or on a transparency, and if the latter is selected, further menu options 54 to designate whether the transparency is destined for use on a portable or traditional projection device. Image type menu options 56 allow the user to optimize the page rendering for sampled image objects only, for graphical shape objects (e.g., presentation graphics) only, or for both (wherein photographic rendering is applied to the sampled image objects while presentation graphics rendering is applied to the graphical shape objects.) As illustrated also in Figure 3B, a Color Mode option 57 may be selected whereupon one of four color modes may be selected. A color morphing mode ("UltraColor") 57A may be selected to preserve the chroma quality of the image; a photographic mode ("UltraColor Plus") 57B may be selected to render the image with color photographic quality, or with presentation graphics quality, or both; a colorimetric matching mode ("Match Other Printers") 57C may be selected to invoke Adobe-specified colorimetric rendering; and a PostScript Level 1 rendering 57D may be selected. Details concerning one suitable color morphing technique may be found in the copending applications listed in the Cross Reference to Related Applications.

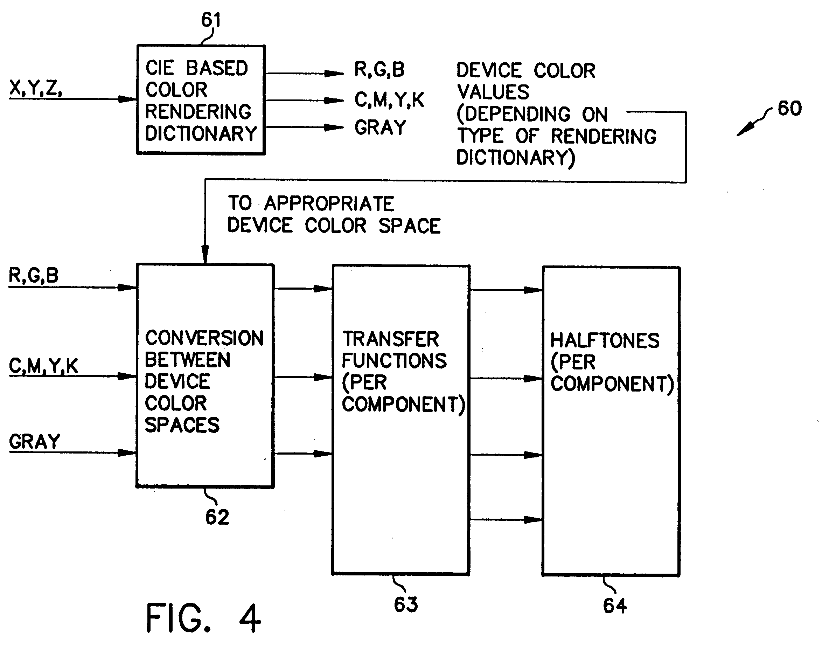

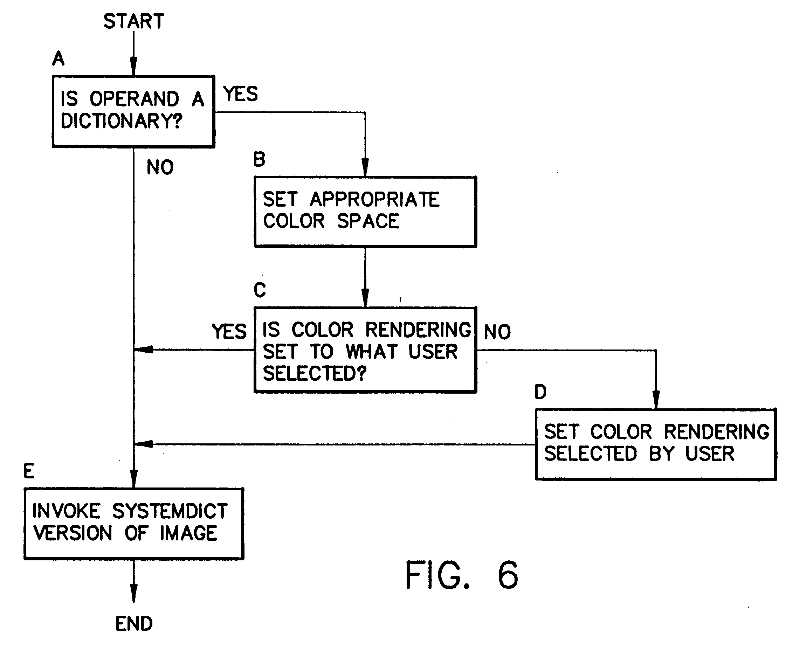

With reference now to Figures 4-6, a particular feature of the color rendering process of the present invention will be understood. As background to the feature to be discussed below, Figure 4 illustrates some aspects of the interpretation of the basic color object rendering process 60. First, the specification of an object is transformed from a device-independent color space to the device-dependent color space appropriate to the respective output device. This transformation is based on a the combination of one or more of: a cascaded series of 3 x 3 color transformation matrices, a group of three-dimensional trilinear interpolation look up tables, or one-dimensional color transform functions; and the foregoing combination is preferably implemented as a color rendering dictionary 61. For example, the output device gamut, the gamut mapping function, and the color mapping function may be described by one or more of the preferred color rendering dictionaries. Most of the entries in a given color rendering dictionary will define a composite color rendering function that transforms a given set of color values to output device color values by application of gamut and color mapping functions.

Secondly, if the color object has been specified in a device color space that is inappropriate for the output device, the interpreter may invoke a color conversion function 62. The interpreter can map device color values through transfer functions 63 to compensate for the peculiarities of the output device, such as a non-linear gray scale response. Finally, the interpreter may provide halftoning 64 if necessary, to paint the appropriate pixels of the raster output device with the requested colors.

According to a particular feature of the present invention, and to provide for optimal color rendering of multiple objects, the color values of an object to be rendered are interpreted according to a color rendering dictionary (CRD) that is selected from a predetermined plurality of color rendering dictionaries. The proper color rendering dictionary (CRD) to be applied to a given graphical object is identified by examining one or more flag values that were set by the application program during the end user's manipulation of the user interface illustrated in Figure 3. When the proper color rendering dictionary is matched to the object to be rendered, the dictionary is applied by invoking the findresource operator. In like manner, each object to be rendered on a page will receive the benefit of a selected color rendering dictionary. Accordingly, the rendering of multiple objects of different types may be optimized for a pleasing color rendition.

Table 1 illustrates a preferred set of color rendering dictionaries suited for storage in memory in the raster image processor. Each dictionary is associated with a particular combination of the "Print Mode", "Projector Light Source", "Color Mode", and Image Type" options selectable from the user interface illustrated in Figure 3. "Portable projectors" refer to projection devices that pass light through a transparency twice before the transparency image is resolved on a focal plane. "Traditional projectors" refer to projection devices that pass light once through the transparency.

| CRD Name | Usage |
| --- | --- |
| CRD_00 | Colorimetric images on reflection media |
| CRD_01 | Colorimetric images on transparency media for portable projectors |
| CRD_02 | Colorimetric images on transparency media for traditional projectors |
| CRD_10 | Photographic images on reflection media |
| CRD_11 | Photographic images on transparency media for portable projectors |

4

| CRD_12 | Photographic images on transparency media for traditional projectors |
|---|---|
| CRD_20 | Presentation graphics images on reflection media |
| CRD_21 | Presentation graphics images on transparency media for portable projectors |
| CRD_22 | Presentation graphics images on transparency media for traditional projectors |
| CRD_30 | Color morphing for images on reflection media |
| CRD_31 | Color morphing for images on transparency media for portable projectors. |
| CRD_32 | Color morphing for images on transparency media for traditional projectors. |

**Table 1: Color Rendering Dictionary Name and Usage**

Since color rendering dictionaries reside in the RIP memory, they need only be referenced, not included, in the job stream. Therefore, the output device driver 32 is responsible for identifying the color rendering dictionary (or dictionaries) to be used. It does this by including PostScript code in the job stream to interpret flag values and invoking the **findresource** operator to apply the appropriate color rendering dictionary (or dictionaries).

Further information regarding the provision of gamut mapping, geometric morphing, colorimetric matching, and the like, for use in composing suitable color rendering dictionaries may be obtained from the patent applications listed above in the Cross Reference to Related Patent Applications, and in various treatises on color management in page descriptions, such as the *PostScript Language Reference Manual,* Second Ed., published by Addison-Wesley Publishing Company, Inc.

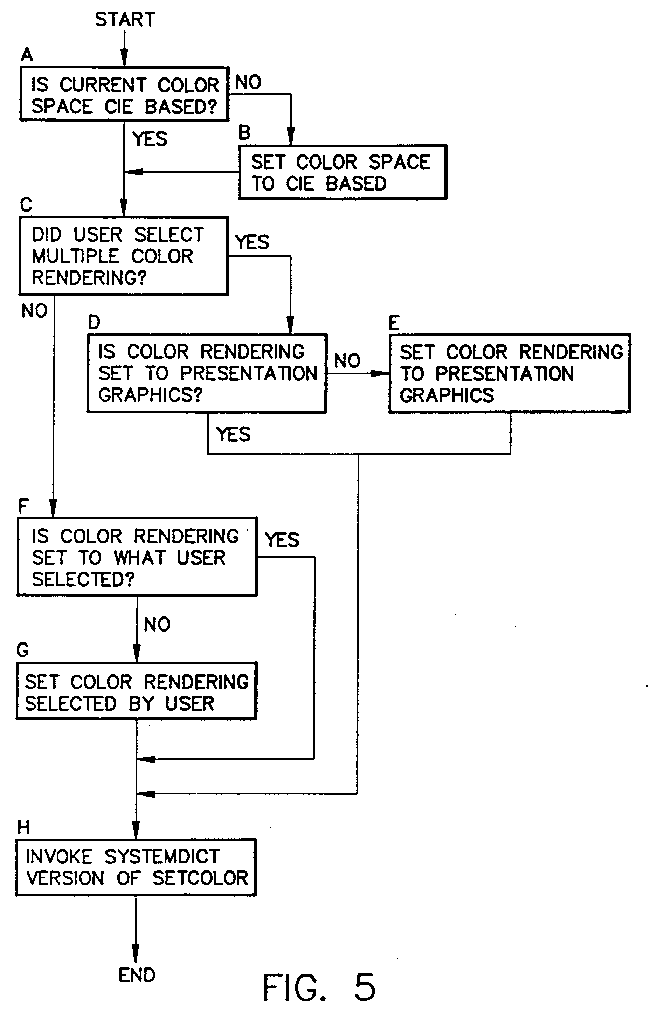

With reference now to Figures 5 - 6, it will be appreciated that certain ones of the graphics operators in the page description language may be re-mapped to enable the above-described optimization of the rendering of sampled images and graphic shape images (e.g., photographic and presentation graphics images, respectively) in a single job. Accordingly, in the preferred embodiment, which presumes the use of Adobe PostScript page description language, and in order to take advantage of the installed plural color rendering dictionaries, the graphics painting operators **setcolor** and **image** are remapped to a global dictionary (**globaldict**) so that the program flow may be redirected before reaching the system dictionary (**systemdict**). The **setcolor** operator is chosen because of its association with the rendering of graphical shape elements that typically constitute the bar charts, illustrations, etc. that comprise presentation graphics. The **image** operator is selected because of its association with the painting of sampled or bit-mapped images. In the preferred embodiment, the **setcolor** and **image** operators are re-mapped in the "prolog" as a procset resource named **KDKRemap**.

The remapping of the **setcolor** operator is provided as follows:

0. Determine if the FeaturesLevel is 2. If not, invoke the systemdict version of setcolor.

1. Define the color space to be CIEBasedABC, if it is not already set accordingly (due to image operator processing, for example).

2. Establish the proper presentation graphics color rendering dictionary, based on the selections made by the user in manipulating the user interface.

3. Invoke the **setcolor** operator.

The following pseudo code represents the contemplated procedure **setcolor** to be installed in the global dictionary:

```
if (current color space != CIEBasedABC) then
        setcolorspace to CIEBasedABC
endif
if (user selected multiple color rendering) then
        if (color rendering != presentation graphics) then
                set color rendering to presentation graphics
        endif
else
        if (color rendering != user selected color rendering) then
                set color rendering to user selected color rendering
        endif
endif

invoke PostScript-defined version of setcolor
```

**Table 2: Pseudo code for remapping the setcolor operator**

The remapping of the image operator is provided as follows:

0. Determine if FeaturesLevel is 2. If not, invoke the systemdict version of setcolor.

1. Specify the proper color space based on the length of the entry Decode from the dictionary operand supplied to the image operator:

| Length | Color Space | Select KDKColorDict Entry |
|--------|-------------|---------------------------|
| 2 | CIEBasedA | CSDA |
| 6 | CIEBasedABC | CSDABC |
| 8 | DeviceCMYK | |

2. Determine the requisite photographic color rendering dictionary according to the media selection.

3. Invoke the image operator.

The following pseudo code represents the procedure **image** to be installed in the global dictionary:

```
if (operand is a dictionary) then
        if (Decode array length == 2) then
                if (current color space != CIEBasedA) then
                        set color space to CIEBasedA
                endif
        else if (Decode array length == 6) then
                if (current color space != CIEBasedABC) then
                        set color space to CIEBasedABC
                endif
        else if (Decode array length == 8) then
                if (current color space != DeviceCMYK) then
                        set color space to DeviceCMYK
                endif
        endif
        if (color rendering != user selected color rendering) then
                set color rendering to user selected color rendering
        endif
endif
invoke PostScript-defined version of setcolor
```

Table 3: Pseudo code for remapping the **image** operator

While the invention has been described with reference to a specific embodiment, it will be understood by those skilled in the art that various changes may be made and equivalents may be substituted for elements thereof without departing from the true spirit and scope of the invention. In addition, many modifications may be made without departing from the essential teachings of the invention.

## Appendix A: PostScript Code for KDKSetCRD

```
%       Copyright 1992, 1993 Eastman Kodak Company - All Rights Reserved
true setglobal
globaldict begin

/KDKSetCRD {
        /ColorRendering findresource
        dup
        currentcolorrendering
        ne
                {setcolorrendering}
                {pop}
        ifelse
} bind def

end
false setglobal
```

## Appendix B: PostScript Code for setcolor operator

```
%       Copyright 1992, 1993 Eastman Kodak Company - All Rights Reserved
true setglobal
globaldict begin

/setcolor {
        KDKI2
                {
                /CIEBasedABC currentcolorspace 0 get
                ne
                        {
                        KDKColorDict /CSDABC get
                        setcolorspace
                        }
                if
                % check that colorrendeing is correct
                KDKColorDict /CRDImageType get 0
                eq
                        {
                        KDKColorDict /CRDName get
                        dup
                        length string copy
                        dup
                        KDKColorDict/CRDNameImageTypeIdx get 50 put
                        KDKSetCRD
                        }
                        {
                        KDKColorDict /CRDName get
                        KDKSetCRD
                        }
                ifelse
```

```
            KDKCheckColorTransfer
        }
    if
    setcolor
} bind def

end
false setglobal
```

---

## Appendix C: PostScript Code for image operator

```
%       Copyright 1992, 1993 Eastman Kodak Company - All Rights Reserved
true setglobal
globaldict begin
/image {
        % check form of the image operator
        dup type /dicttype eq
        KDKI2
        and
                {
                % specify the proper color space, if necessary
                dup
                /Decode get
                length
                dup
                dup
                2 eq { KDKColorDict /CSDA get 3 1 roll } if
                6 eq { KDKColorDict /CSDABC get exch } if
                8 eq { [/DeviceCMYK] } if
                dup
                0 get
                currentcolorspace
                0 get
                ne
                        { setcolorspace }
                        { pop }
                ifelse
                % check that colorrendeing is correct
                KDKColorDict /CRDName get
                KDKSetCRD
                KDKCheckColorTransfer
                }
        if
        image
} bind def
end
false setglobal
```

## Claims

1. A method for optimal color rendering of multiple objects in a page description, the objects having object types, comprising the steps of:

a) providing a plurality of color rendering dictionaries, wherein each dictionary may be used to implement a particular color transformation of the color values of an object to be rendered;

b) establishing a first painting operator for the painting of a graphical shape object type;

c) remapping the first painting operator to cause the rendering of objects being of the graphical shape object type to be implemented according to a first one of said color rendering dictionaries;

d) establishing a second painting operator for the painting of a sampled image object type; and

e) remapping the second painting operator to cause the rendering of objects being of the sampled image object type to be implemented according to a second one of said color rendering dictionaries.

2. The method of claim 1, wherein the first painting operator is the PostScript **setcolor** operator.

3. The method of claim 1, wherein the second painting operator is the PostScript **image** operator.

4. The method of claim 1, wherein the color transformation in at least one of said color rendering dictionaries is optimized for printing a reflection print.

5. The method of claim 1, wherein the color transformation in at least one of said color rendering dictionaries is optimized for printing a transparency.

6. The method of claim 1, wherein the color transformation in at least one of said color rendering dictionaries is optimized for a presentation graphics image quality color rendering mode.

7. The method of claim 1, wherein the color transformation in at least one of said color rendering dictionaries is optimized for a photographic image quality color rendering mode.

8. The method of claim 1, wherein the color transformation in at least one of said color rendering dictionaries is optimized for a colorimetric matching color rendering mode.

9. The method of claim 1, wherein the color transformation in at least one of said color rendering dictionaries is optimized for a color morphing color rendering mode.

10. The method of claim 1, wherein the color transformation in at least one of said color rendering dictionaries is optimized for an Adobe PostScript Level 1 color rendering mode.

11. The method of claim 1, wherein the plurality of the color rendering dictionaries is based on a the combination of one or more of: a cascaded series of 3 x 3 color transformation matrices, a group of three-dimensional trilinear interpolation look up tables, or one-dimensional color transform functions.

12. The method of claim 1, wherein each color rendering dictionary is associated with the combination of one or more of the following: a predetermined print mode, a predetermined color rendering mode, and an object type.

FIG. 1

EP 0 619 555 A2

REALLY BIG
CORPORATE STUFF

40-1

40-2

40-3

40-4

THIS IS THE TEXT OBJECT. IT
CONSISTS OF TEXT, WHICH IS
MADE UP FROM ONE OR MORE
TYPE FACES WITH POSSIBLY SOME
ATTRIBUTES FOR SPACING,
JUSTIFICATION, KERNING, AND, OF
COURSE, COLOR.

40-5

FIG. 2

FILE   HELP

COLOREASE PS FEATURES   [                    ]

[ OK ]

[ CANCEL ]

┌─ PRINT MODE ──────────┐
│  ○ PAPER                      │
│  ⦿ TRANSPARENCY          │
└──────────────────────┘
52

┌─ PROJECTOR LIGHT SOURCE ─┐
│  ○ TOP                            │
│  ⦿ BOTTOM                      │
└──────────────────────────┘
54

50

┌─ COLOR ────────────────────────────────┐
│  COLOR MODE:   [ ULTRACOLOR PLUS        ⬇ ]      │
│                                                          │
│  IMAGE TYPE:   ○ PRESENTATION GRAPHICS            │
│                ○ PHOTO CD                      │
│                ⦿ BOTH                         │
│                                                          │
│  BRIGHTNESS:  [ NORMAL      ⬇ ]    TINT:  [ NORMAL      ⬇ ] │
└────────────────────────────────────────┘
57
56

FIG. 3A

57

COLOR MODE: | ULTRACOLOR ⬇ |

57A — ULTRACOLOR
57B — ULTRACOLOR PLUS
57C — MATCH OTHER PRINTERS
57D — POSTSCRIPT LEVEL 1

FIG. 3B

FIG. 4

EP 0 619 555 A2

START

A
IS CURRENT COLOR SPACE CIE BASED? → NO

YES

B
SET COLOR SPACE TO CIE BASED

C
DID USER SELECT MULTIPLE COLOR RENDERING? → YES

NO

D
IS COLOR RENDERING SET TO PRESENTATION GRAPHICS? → NO

E
SET COLOR RENDERING TO PRESENTATION GRAPHICS

YES

F
IS COLOR RENDERING SET TO WHAT USER SELECTED? → YES

NO

G
SET COLOR RENDERING SELECTED BY USER

H
INVOKE SYSTEMDICT VERSION OF SETCOLOR

END

FIG. 5

START

A
IS OPERAND A
DICTIONARY?

YES

NO

B
SET APPROPRIATE
COLOR SPACE

C
YES | IS COLOR RENDERING
SET TO WHAT USER
SELECTED? | NO

D
SET COLOR RENDERING
SELECTED BY USER

E
INVOKE SYSTEMDICT
VERSION OF IMAGE

END

FIG. 6

EP 0 619 555 A2